# EUROPEAN PATENT APPLICATION

(11) **EP 4 782 785 A1**
(43) Date of publication of application: **29.07.2026**
(21) Application number: 26152760.0
(22) Date of filing: 19.01.2026
(51) Int. Cl.: G01B 5/14, F01D 21/00, G01B 5/18

(54) **RUB HOLE-BAR MEASUREMENT**

(30) Priority: 23.01.2025 US 202519035606
(71) Applicant: RTX Corporation, Farmington, CT 06032 (US)
(72) Inventor: WARREN, Eli, Bend (US); WARD, Thomas W., Manchester (US)
(74) Representative: Dehns

(57) **Abstract**

A method of determining a fan liner blade tip clearance includes providing a measurement instrument (200). The measurement instrument (200) includes a set screw (220), and a base (210) including threaded through hole (212) configured to accept the set screw (220). The method also includes placing a bottom surface of the base (210) against the fan liner (110) wherein the through hole (212) aligns with a wear hole (114) of the fan liner (110), and after the placement, turning the set screw (220) within the through hole (212) until a bottom surface of the set screw (220) contacts a lower surface (116) of the wear hole (114). The method also includes measuring an exposed portion (222) of the set screw (220) extending below the bottom surface of the base (210) after contact with the lower surface (116) of the wear hole (114) is made, and determining a blade tip clearance with the fan liner (110) based on a value of the measurement.

## Description

### TECHNICAL FIELD

This disclosure generally relates to gas turbine engines. More specifically, this disclosure relates to rub hole-bar measurement.

### BACKGROUND

Gas turbine engines may include a fan liner to minimize blade tip clearance (BTC) between the fan blade tips and the engine housing. During operation, the blade tip clearance is reduced due to heating of the fan blades, centrifugal loading, etc. which causes contact with an abradable surface of the fan liner. As the abradable surface wears, the engine becomes less efficient due to increased BTC, warranting replacement of the fan liner. However, early replacement of the fan liner may result in unnecessary expense. Therefore, it is desirable to take accurate measurements of the BTC and/or wear of the abradable surface in the field without disassembly of the engine or removal of the engine from a vehicle.

### SUMMARY

This disclosure relates to rub hole-bar measurement.

In an aspect, a method of determining a fan liner blade tip clearance may include providing a measurement instrument. The measurement instrument may include a set screw, and a base including threaded through hole configured to accept the set screw. The method may also include placing a bottom surface of the base against the fan liner wherein the through hole aligns with a wear hole of the fan liner, and after the placement, turning the set screw within the through hole until a bottom surface of the set screw contacts a lower surface of the wear hole. The method may also include measuring an exposed portion of the set screw extending below the bottom surface of the base after contact with the lower surface of the wear hole is made, and determining a blade tip maximum rub with the fan liner based on a value of the measurement.

In another aspect, a method of determining a fan liner wear value may include providing a measurement instrument. The measurement instrument may include a set screw, and a base including threaded through hole configured to accept the set screw. The method may also include placing a bottom surface of the base against the fan liner wherein the through hole aligns with a wear hole of the fan liner, and after the placement, turning the set screw within the through hole until a bottom surface of the set screw contacts a lower surface of the wear hole. The method may also include measuring an exposed portion of the set screw extending below the bottom surface of the base after contact with the lower surface of the wear hole is made, and determining a wear value of the fan liner based on a value of the measurement.

In still another aspect, a fan liner wear hole depth measurement instrument may include a set screw. The measurement instrument may also include a base including a threaded through hole configured to accept the set screw.

Any single one or any combination of the following features may be used with the above aspects. The method may also include subtracting the value of the measurement from a first baseline value, and adding a result of the subtraction to a second baseline value to determine the blade tip maximum rub with the fan liner. The method may also include subtracting the value of the measurement from a baseline value to determine the wear value of the fan liner. The base may be a coupling nut. The base may include an alignment indicator for aligning the base with the fan liner during placement. The alignment indicator may be at least one of text, a symbol, a mark, and a color contrasting with a predominant color of the base. The base may include a first shape conforming to a shape of the fan liner. The first shape may be an arc. The arc may have a radius larger than an inner radius of the fan liner.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates an example of blade tip clearance between a fan blade tip and an abradable surface of a fan liner in accordance with this disclosure;
FIGURES 2A-2C illustrate an example fan liner wear hole depth measurement instrument in accordance with this disclosure;
FIGURE 3 illustrates an example of a fan liner wear hole depth measurement with a fan liner wear hole depth measurement instrument in accordance with this disclosure;
FIGURE 4 illustrates another example fan liner wear hole depth measurement instrument in accordance with this disclosure; and
FIGURE 5 illustrates another example of blade tip clearance between a fan blade tip and an abradable surface of a fan liner in accordance with this disclosure.

### DETAILED DESCRIPTION

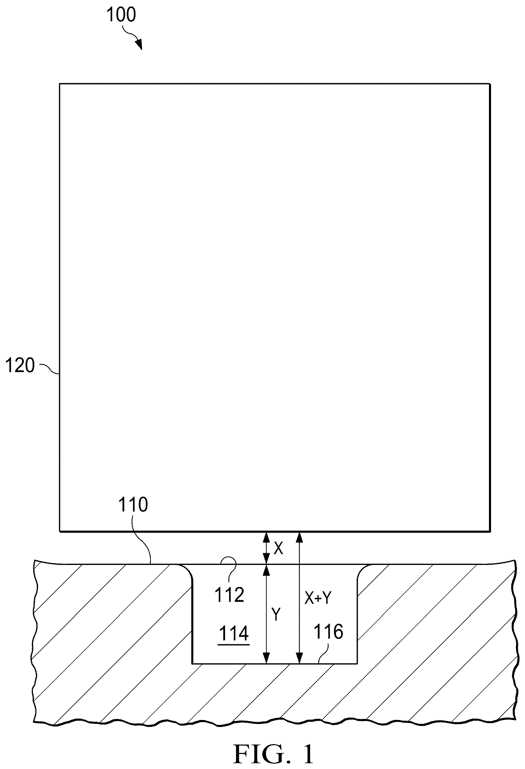

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, gas turbine engines may include a fan liner to minimize blade tip clearance (BTC) between the fan blade tips and the engine housing. During operation, the blade tip clearance is reduced due to heating of the fan blades, centrifugal loading, etc. which causes contact with an abradable surface of the fan liner. As the abradable surface wears, the engine becomes less efficient due to increased BTC, warranting replacement of the fan liner. However, early replacement of the fan liner may result in unnecessary expense. Therefore, it is desirable to take accurate measurements of the BTC and/or wear of the abradable surface in the field without disassembly of the engine or removal of the engine from a vehicle.

FIGURE 1 illustrates an example 100 of blade tip clearance between a fan blade tip and an abradable surface of a fan liner in accordance with this disclosure. As can be seen in FIGURE 1, a fan liner 110 includes an abradable surface 112 and a wear hole 114. Wear hole 114 includes a lower surface 116. In the Example of FIGURE 1, a fan blade tip 120 has BTC "X" with abradable surface 112, and wear hole 114 has a depth "Y" between abradable surface 112 and lower surface 116. Wear hole 114 may be used to assist in measuring BTC X, as it may be difficult to accurately and consistently measure BTC X directly with existing measurement instruments such as banana gauges.

As abradable surface 112 experiences wear, BTC X increases, and depth Y decreases. However, the sum of BTC X and depth Y is effectively constant despite any wear to abradable surface 112. Therefore, BTC X and/or wear to abradable surface 112 can be determined by comparing a measurement of depth Y against a baseline value. For example, during assembly of an engine including fan liner 110 and fan blade tip 120, a baseline measurement may be taken for BTC "X" and depth "Y" before any wear to fan liner 110. The baseline value could also be a nominal value based on a typical BTC or wear hole depth. In some embodiments, BTC X may be determined by taking a measurement of depth Y, subtracting the value of the measured depth Y from a baseline wear hole depth value, and adding the difference to a baseline BTC value. The resulting value is the present BTC value between the fan blade tip and the abradable surface of the fan liner. In some embodiments, wear to abradable surface 112 may be determined by taking a measurement of depth Y and subtracting the value of the measured depth Y from a baseline wear hole depth value. The resulting value is the present fan liner wear value with respect to the baseline value due to interaction with the blade tip.

Although FIGURE 1 illustrates an example 100 of blade tip clearance between a fan blade tip and an abradable surface of a fan liner, various changes could be made to FIGURE 1. For example, FIGURE 1 is not drawn to scale, and the actual BTC may vary, as well as the proportions of fan blade tip 120 and/or fan liner 110.

As noted above, BTC value and/or fan liner wear value may be determined by measuring the depth of a wear hole in the fan liner. This is particularly useful when the depth of the wear hole may be measured while the engine is on the vehicle, as a replacement decision regarding the fan liner can be made without disassembly of the vehicle or the engine. However, existing measurement instruments may be unable to consistently and accurately measure the wear hole depth while the engine is assembled. The present application provides embodiments of measurement instruments and techniques for measuring a fan liner wear hole without disassembly or removal of an engine from a vehicle.

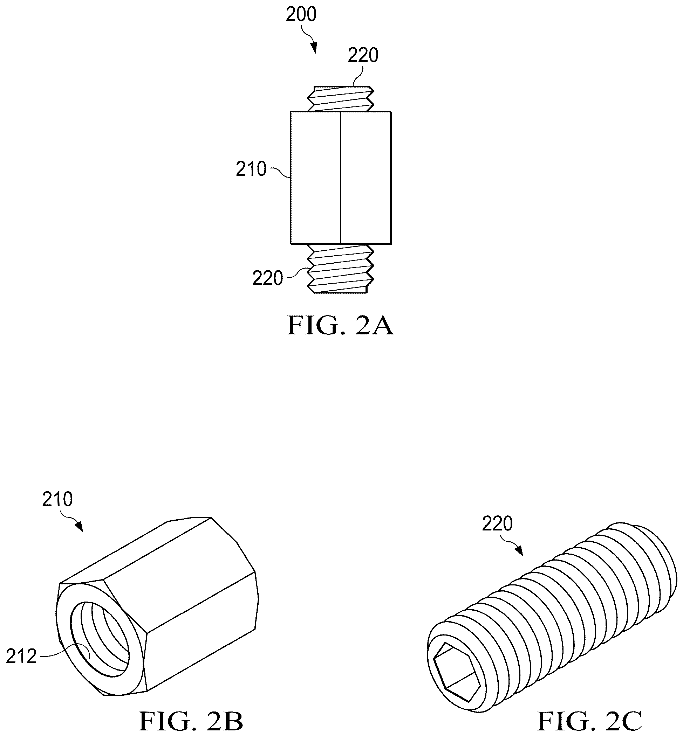

FIGURES 2A-2C illustrate an example fan liner wear hole depth measurement instrument 200 in accordance with this disclosure. As can be seen in FIGURE 2A, instrument 200 includes a base 210, further illustrated in FIGURE 2B, and a set screw 220, further illustrated in FIGURE 2C. As can be seen in FIGURE 2B, base 210 includes a through hole 212. Through hole 212 runs entirely through base 210, and is threaded to accept set screw 220 as shown in FIGURE 2A. In the Example of FIGURES 2A-2C, base 210 is depicted as a coupling nut. However, base 210 may be of any appropriate shape or configuration.

Although FIGURES 2A-2C illustrate an example fan liner wear hole depth measurement instrument 200, various changes could be made to FIGURES 2A-2C. For example, FIGURES 2A-2C are not drawn to scale, and the sizes of base 210, and/or set screw 220 may vary according to particular needs.

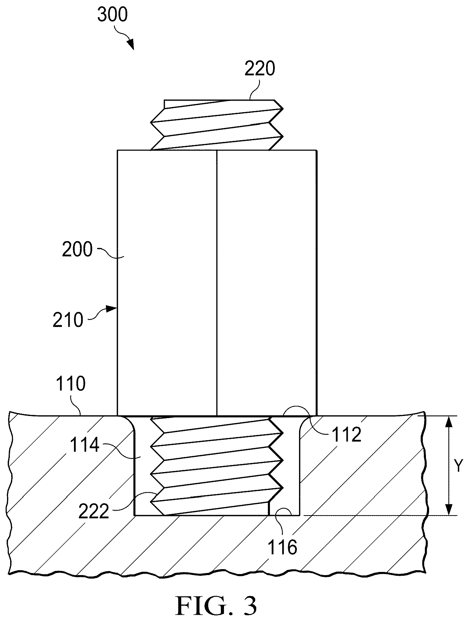

FIGURE 3 illustrates an example 300 of a fan liner wear hole depth measurement with a fan liner wear hole depth measurement instrument in accordance with this disclosure. As can be seen in FIGURE 3, example 300 shows a measurement procedure for wear hole 114 of fan liner 110 with instrument 200. In the example of FIGURE 3, determination of a wear hole depth Y of wear hole 114 is performed as follows. A bottom surface of base 210 is placed against fan liner 110 wherein through hole 212 aligns with wear hole 114. After placement of base 210 against fan liner 110, set screw 220 is turned within through hole 212 until the bottom surface of set screw 220 contacts lower surface 116. At this stage, an exposed portion 222 of set screw 220 has a length "Y" that corresponds to the depth Y of wear hole 114. To determine the depth Y of wear hole 114, instrument 200 is carefully removed such that exposed portion 222 is unchanged, and length Y is measured with another instrument such as a micrometer or caliper. The measurement will correspond to depth Y of wear hole 114, which may be used to determine the wear to fan liner 110, a BTC between fan liner 110 and a fan blade tip, etc. as previously described.

Measurement with instrument 200 provides several advantages over existing measurement techniques. For example, measurement instrument 200 provides a localized baseline, because the face of base 210 provides a local zero for the drop measurement. Furthermore, measurement with instrument 200 may be performed with the engine in any orientation.

Although FIGURE 3 illustrates an example 300 of a fan liner wear hole depth measurement with a fan liner wear hole depth measurement instrument, various changes could be made to FIGURE 3. For example, while FIGURE 3 illustrates the measurement performed with instrument 200, the measurement could be performed with a similar instrument using similar techniques.

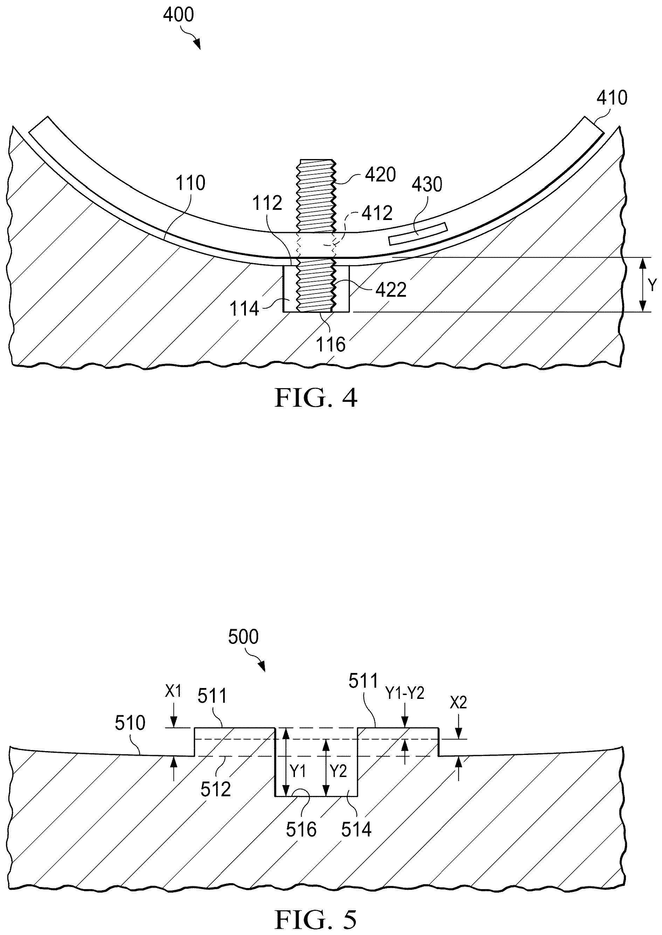

FIGURE 4 illustrates another example fan liner wear hole depth measurement instrument 400 in accordance with this disclosure. As can be seen in FIGURE 4, instrument 400 is placed against fan liner 110 for performance of a wear hole depth measurement similar as described regarding FIGURE 3. As can be seen in FIGURE 4, instrument 400 includes a base 410 and a set screw 420. Base 410 includes a through hole 412. Through hole 412 runs entirely through base 410, and is threaded to accept set screw 420 similarly as shown in FIGURE 2A with respect to base 210 and set screw 220. Base 410 is a plate that has shape (i.e., an arc shape) with a slightly larger radius than the inner radius of fan liner 110. In this manner, the shape of base 410 is conforming with the shape of fan liner 110. This enables stabilization of base 410 during placement against fan liner 110, and a reference point to maintain base 410 parallel with another surface such the front face of an engine case. In this manner, a technician performing a measurement with instrument 400 may take the measurement in a consistent orientation and placement. In some embodiments, instrument 400 may also include an alignment indicator 430 to indicate a front edge of base 410. This may aid a technician from accidently placing instrument 400 against fan liner 110 in a backward orientation.

In the example of FIGURE 4, determination of a wear hole depth Y of wear hole 114 with instrument 400 is performed as follows. A bottom surface of base 410 is placed against fan liner 110 wherein through hole 412 aligns with wear hole 114. After placement of base 410 against fan liner 110, set screw 420 is turned within through hole 412 until the bottom surface of set screw 420 contacts lower surface 116. At this stage, an exposed portion 422 of set screw 420 has a length "Y" that corresponds to the depth Y of wear hole 114. To determine the depth Y of wear hole 114, instrument 400 is carefully removed such that exposed portion 422 is unchanged, and length Y can be measured with another instrument such as a micrometer or caliper. The measurement will correspond to depth Y of wear hole 114, which may be used to determine the wear to fan liner 110, a BTC between fan liner 110 and a fan blade tip, etc. as previously described.

Although FIGURE 4 illustrates an example fan liner wear hole depth measurement instrument 400, various changes could be made to FIGURE 4. For example, FIGURE 4 is not drawn to scale, and the sizes of base 410, and/or set screw 420, as well as the shape of base 410 may vary according to particular needs. Furthermore, while alignment indicator 430 is depicted as the text "FRONT", alignment indicator 430 could be a simple mark, a symbol, a color contrasting with a predominant color of base 410, etc.

While previous examples of wear hole depth measurements herein have been described with respect to a wear hole depth, a fan liner may additionally include one or more rub bars. If the rub bar(s) also include a wear hole, measurements may be made with a wear hole measurement instrument such as instrument 200 to measure a radial excursion of a blade before it trenches the liner.

FIGURE 5 illustrates another example 500 of blade tip clearance between a fan blade tip and an abradable surface of a fan liner in accordance with this disclosure. As can be seen in FIGURE 5, a fan liner 510 includes a rub bar 511, an abradable surface 512 and a wear hole 514. Wear hole 514 includes a lower surface 516. In the Example of FIGURE 5, rub bar 511 has a depth "X1" above abradable surface 512, which represents a baseline depth of rub bar 511 prior to any wear. During operation, rub bar 511 may be abraded by a fan blade such that rub bar 511 has a depth "X2" above abradable surface 512. The difference between depth X1 and X2 represents a radial excursion of the fan blade without trenching into abradable surface 512.

As rub bar 511 experiences wear, a baseline depth "Y1" decreases to a depth "Y2". Therefore, the radial excursion of the fan blade can be determined by measuring the depth of wear hole 514 with a measurement instrument such as instrument 200, and subtracting the measurement from a baseline depth (i.e., Y1-Y2). The resulting value is the maximum fan blade excursion during operation of the engine, presuming that the fan blade has not trenched into the abradable surface 512.

Although FIGURE 5 illustrates an example 500 of blade tip clearance between a fan blade tip and an abradable surface of a fan liner, various changes could be made to FIGURE 5. For example, FIGURE 5 is not drawn to scale, and the actual BTC may vary, as well as the proportions of fan liner 510, rub bar 511, etc.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method of determining a fan liner blade tip clearance, the method comprising:
providing a measurement instrument, the measurement instrument comprising:
a set screw; and
a base including a threaded through hole configured to accept the set screw;
placing a bottom surface of the base against a fan liner wherein the through hole aligns with a wear hole of the fan liner;
after the placement, turning the set screw within the through hole until a bottom surface of the set screw contacts a lower surface of the wear hole;
measuring an exposed portion of the set screw extending below the bottom surface of the base after contact with the lower surface of the wear hole is made; and
determining a blade tip maximum rub with the fan liner based on a value of the measurement.

2. The method of claim 1, wherein determining the blade tip maximum rub with the fan liner based on the value of the measurement comprises subtracting the value of the measurement from a first baseline value, and adding a result of the subtraction to a second baseline value.

3. A method of determining a fan liner wear value, the method comprising:
providing a measurement instrument, the measurement instrument comprising:
a set screw; and
a base including a threaded through hole configured to accept the set screw;
placing a bottom surface of the base against a fan liner wherein the through hole aligns with a wear hole of the fan liner;
after the placement, turning the set screw within the through hole until a bottom surface of the set screw contacts a lower surface of the wear hole;
measuring an exposed portion of the set screw extending below the bottom surface of the base after contact with the lower surface of the wear hole is made; and
determining a wear value of the fan liner based on a value of the measurement.

4. The method of claim 3, wherein determining the wear value of the fan liner based on the value of the measurement comprises subtracting the value of the measurement from a baseline value.

5. The method of any preceding claim, wherein the base is a coupling nut.

6. The method of any preceding claim, wherein the base includes an alignment indicator for aligning the base with the fan liner during placement.

7. The method of any preceding claim, wherein the base includes a first shape conforming to a shape of the fan liner.

8. The method of claim 7, wherein the first shape is an arc.

9. The method of claim 8, wherein the arc has a radius larger than an inner radius of the fan liner.

10. A fan liner wear hole depth measurement instrument comprising:
a set screw; and
a base including a threaded through hole configured to accept the set screw.

11. The measurement instrument of claim 10, wherein the base includes an alignment indicator for aligning the base with the fan liner during placement.

12. The measurement instrument of claim 11, wherein the alignment indicator is at least one of text, a symbol, a mark, and a color contrasting with a predominant color of the base.

13. The measurement instrument of any of claims 10 to 12, wherein the base includes a first shape conforming to a shape of the fan liner.

14. The measurement instrument of claim 13, wherein the first shape is an arc.

15. The measurement instrument of claim 14, wherein the arc has a radius larger than an inner radius of the fan liner.
